# EUROPEAN PATENT SPECIFICATION

(11) **EP 4 557 039 B1**
(45) Date of publication and mention of the grant of the patent: **14.10.2026**
(21) Application number: 24213056.5
(22) Date of filing: 14.11.2024
(51) Int. Cl.: G05D 16/10

(54) **PRESSURE REGULATOR**
DRUCKREGLER
RÉGULATEUR DE PRESSION

(30) Priority: 16.11.2023 US 202363599634 P
(43) Date of publication of application: 21.05.2025
(73) Proprietor: Eaton Intelligent Power Limited, Dublin D04 Y0C2 (IE)
(72) Inventor: MURPHY, Niall, Dublin (IE)
(74) Representative: Schwan Schorer & Partner mbB

(56) References cited:
- BE-A- 408 015
- US-A1- 2003 034 468
- US-A1- 2017 114 924

## Description

### BACKGROUND

Some components function best when a constant fluid pressure is maintained at the component. Accordingly, a pressure regulator can be disposed along a fluid pathway to regulate the pressure. Certain types of pressure regulators are manufactured to maintain a predetermined amount of pressure. For example, the pressure regulator may include a spring-biased poppet. The amount of fluid pressure needed to open or close the poppet depends on the spring force applied to the poppet. Improvements are desired.

In US 2017/114924 A1 there is disclosed a pressure regulator as it is defined in the preamble of claim 1. Similar pressure regulator are also disclosed in BE 408 015 A and in US 2003/034468 A1.

### SUMMARY

The present invention is a pressure regulator as it is defined in claim 1 and a method of operating a pressure regulator as it is defined in claim 9.

The pressure regulator is configured to receive fluid (e.g., gas) at an inlet port and to transfer at least a portion of the fluid to an outlet port. The pressure regulator selectively opens and closes a pathway between the inlet and outlet ports to regulate a fluid pressure at the outlet port. In accordance with certain aspects of the disclosure, the fluid pressure is regulated by a poppet that selectively seals part of the pathway.

The inlet region is configured to receive the fluid along a first direction and the poppet is biased to the open position along the first direction. In certain examples, the biasing member that biases the poppet in the first direction is not accessible to a technician without dismantling/disabling the regulator.

In certain implementations, the poppet defines a fluid passage away from the outlet ports. Fluid passing along the fluid passage acts on the poppet to move the poppet to the closed position.

In certain implementations, the amount of fluid pressure needed to move the poppet to the closed position is adjustable without dismantling/disabling the regulator. In certain examples, the fluid pressure needed to close the pathway is adjustable from an exterior of the housing. In certain examples, the threshold fluid pressure is adjusted by moving a stop (e.g., a spring stop) within the regulator to change a biasing force applied by a pre-load member within the regulator.

### BRIEF DESCRIPTION OF THE DRAWINGS

The accompanying drawings, which are incorporated in and constitute a part of the description, illustrate several aspects of the present disclosure. A brief description of the drawings is as follows:

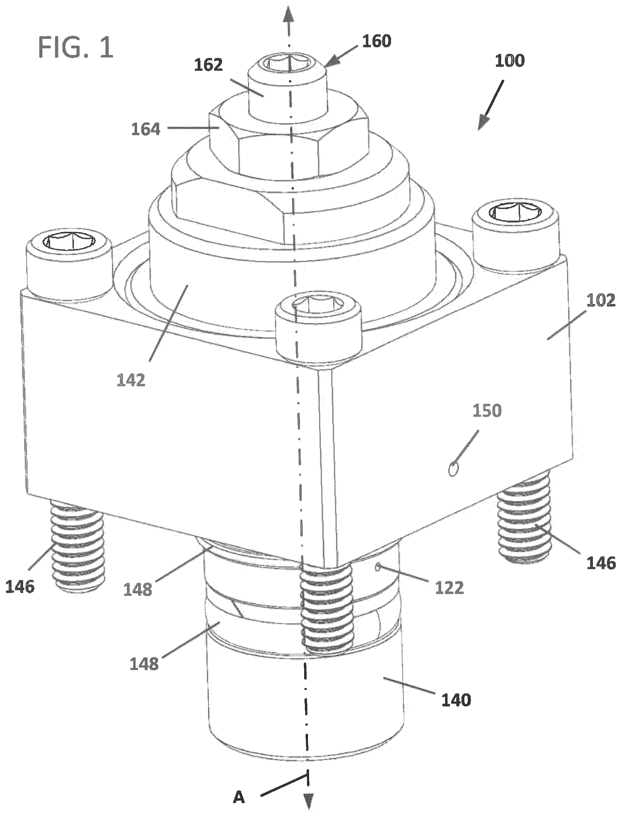

FIG. 1 is a perspective view of an example pressure regulator configured in accordance with the principles of the present disclosure;
FIG. 2 is an axial cross-section taken of the pressure regulator of FIG. 1 with a poppet disposed in an open position;
FIG. 3 is the same axial cross-section as FIG. 2 with different components labeled for convenience and legibility; and
FIG. 4 is an axial cross-section taken of the pressure regulator of FIG. 1 with the poppet disposed in a closed position.

### DETAILED DESCRIPTION

Reference will now be made in detail to exemplary aspects of the present disclosure that are illustrated in the accompanying drawings. Wherever possible, the same reference numbers will be used throughout the drawings to refer to the same or like parts.

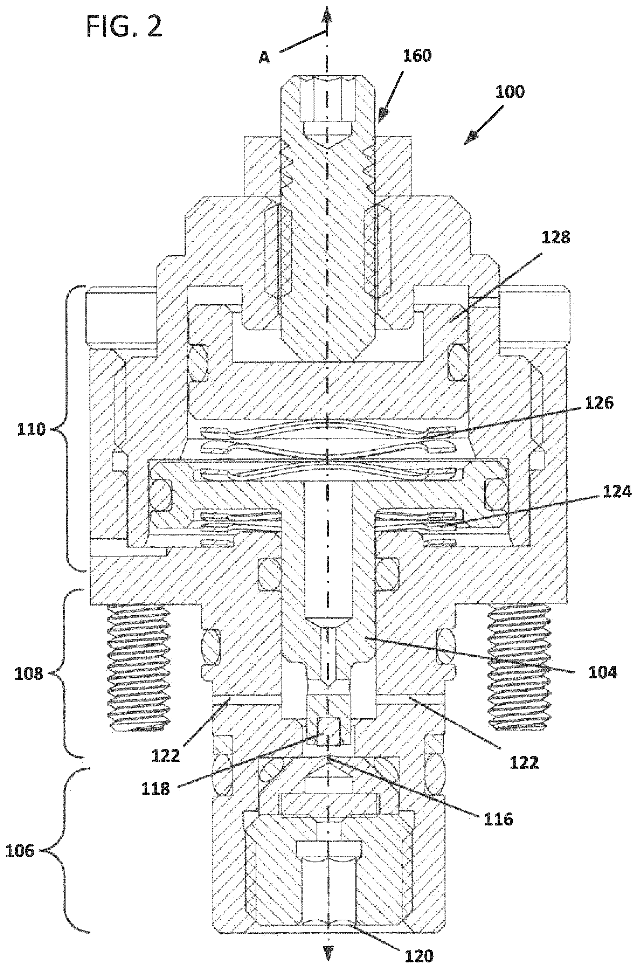

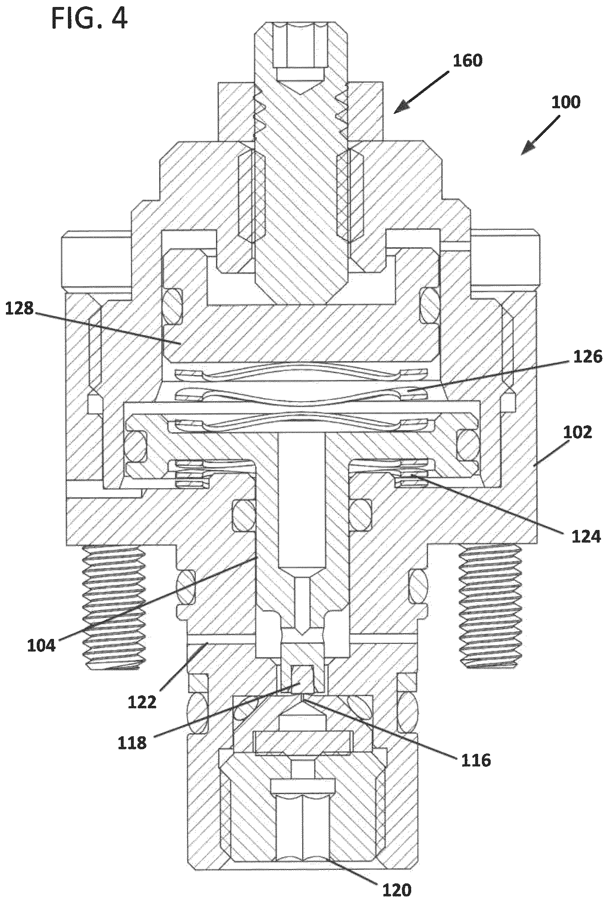

A pressure regulator 100 includes a housing 102 and a poppet 104 movable within the housing 102 along a longitudinal axis A between an open position (e.g., see FIG. 2) and a closed position (e.g., see FIG. 4). The housing 102 defines an inlet region 106 and an outlet region 108. The inlet region 106 defines an inlet port 120 leading from an exterior of the housing 102 to the inlet region 106. The outlet region 108 defines one or more outlet ports 122 leading from the outlet region 108 to an exterior of the housing 102. The housing 102 defines a passage 116 between the inlet region 106 and the outlet region 108. The poppet seals the passage 116 when disposed in a closed position. The poppet opens the passage 116 when moved towards the open position.

In some implementations, the poppet 104 carries a seal 118 that presses against one end of the passage 116 when the poppet 104 is disposed in the closed position. In such implementations, the poppet 104 moves the seal 118 to a location spaced from the passage 116 when the poppet 104 moves towards the open position. In other implementations, the seal 118 is fixedly mounted around the passage 116 and the poppet 104 presses against the seal 118 when the poppet is disposed in the closed position. In such implementations, the poppet 104 moves away from the seal 118 when moved toward the open position.

The housing 102 also defines a regulating region 110. The poppet 104 defines a pathway 136 from the outlet region 108 to the regulating region 110. Accordingly, as fluid flows from the inlet region 106 to the outlet region 108 through passage 116, a portion of the fluid also flows along the pathway 136 to the regulating region 110. The fluid collected in the regulating region 110 acts on the poppet 104 to move the poppet 104 to the closed position. In certain examples, the pressure of the fluid within the regulating region 110 acts in an opposite direction from the pressure of the fluid within the inlet region 106.

In certain implementations, the poppet 104 is biased towards the open position. For example, a biasing member 124 (e.g., one or more wave springs, a coil spring, etc.) may be disposed in the regulating region 110 to bias the poppet 104 towards the open position. The passage 116 is closed when the fluid in the regulating region 110 builds up sufficient pressure to counteract the bias of the biasing member 124. As will be described in more detail herein, the biasing member 124 may be inaccessible without dismantling the housing 102.

In certain implementations, the poppet 104 can be pre-loaded towards counteracting the bias of the biasing member 124. For example, the biasing member 124 can be a first biasing member while a second biasing member 126 is disposed within the regulating region 110 to bias the poppet 104 towards the closed position. The second biasing member 126 is configured to apply less force than the first biasing member 124. Accordingly, the poppet 104 moves to the closed position only when fluid pressure within the regulating region 110 is sufficient to supplement the biasing force of the second biasing member 126 to overcome the biasing force of the first biasing member 124.

In certain implementations, the pre-load force applied to the poppet 104 is adjustable. For example, the second biasing member 126 is braced against a stop 128 disposed within the regulating region 110. The biasing force of the second biasing member 126 is proportional to the position of the stop 128 within the regulating region 110. As the stop 128 is moved closer to the poppet 104, the biasing force of the second biasing member 126 increases. As the stop 128 is moved away from the poppet 104, the biasing force of the second biasing member 126 is reduced.

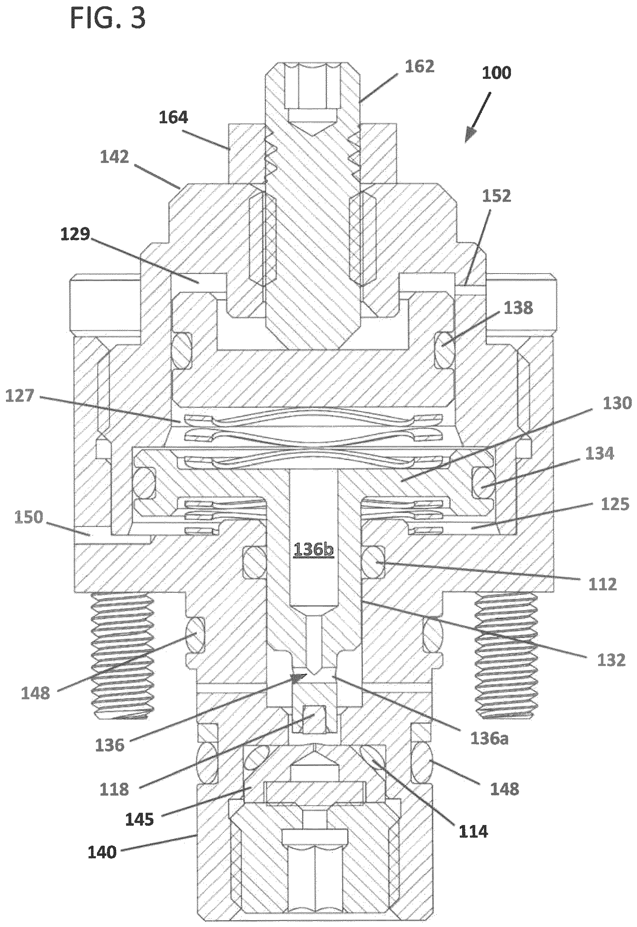

The position of the stop 128 is adjustable within the regulating region 110 using a manual adjustment interface arrangement 160. In certain implementations, accessible from an exterior of the housing 102. In certain implementations, the adjustment interface arrangement 160 extends from a first end contacting the stop 128, through the housing 102, to a second end external of the housing 102. In some implementations, the adjustment interface arrangement 160 is twistable to shift the position of the stop 128. For example, the adjustment interface arrangement 160 may include a threaded rod 162 and nut (e.g., jam nut) 164 (e.g., see FIG. 3). In other implementations, the adjustment interface arrangement 160 can shift the position of the stop 128 through a sliding motion or another type of movement.

In certain examples, the inlet region 106, the outlet region 108, and the regulating region 110 are aligned along the longitudinal axis A. In certain implementations, the outlet region 108 is disposed between the inlet region 106 and the regulating region 110. In some examples, the inlet port 120 faces along the longitudinal axis A. In other examples, the inlet port 120 can be radial, tangential, or otherwise angled relative to the longitudinal axis A. In certain implementations, the passage 116 is sufficiently small that pressure from fluid passing through the passage 116 from the inlet region 106 to the outlet region 108 has little affect on the movement of the poppet 104. Rather, a majority of the force applied to the poppet 104 to move the poppet 104 towards the open position is applied by the first biasing member 124.

In certain implementations, the one or more outlet ports 122 each define a channel extending radially outwardly from the outlet region 108. In the example shown, the housing 102 defines two outlet ports 122 extending in opposite directions. Other outlet port configurations are possible. For example, the outlet ports 122 may be tangential, parallel, or otherwise angled relative to the longitudinal axis A.

As shown in FIG. 3, the housing 102 includes a first housing 140 and a second housing 142. The first housing 140 defines the inlet region 106. In certain examples, the first housing 140 also defines the outlet ports 122. The second housing 142 holds the stop 128 and the adjustment interface arrangement 160. The poppet 104 is sandwiched between the first and second housings 140, 142. In some implementations, the first and second housings 140, 142 are latched, threaded, fastened, or otherwise removably coupled together. In other implementations, the first and second housings 140, 142 are welded or otherwise non-removably fastened together.

In certain implementations, the pressure regulator 100 is configured to mount to a manifold (not shown). The manifold defines an inlet pathway leading to the inlet port 120 and defines one or more outlet pathways leading away from the one or more outlet ports 122. The manifold may connect a high pressure storage tank to a thruster or other component needing a regular source of pressure. The pressure regulator 100 is positioned along the manifold to regulate how much fluid pressure from the inlet pathway is transferred to the outlet pathway.

In certain implementations, the pressure regulator 100 is configured to releasably mount to the manifold. For example, the housing 102 may be configured to mount to the manifold using one or more fasteners 146. In certain examples, the fasteners 146 may extend through the first housing 140. In certain implementations, housing 102 may be configured to seal to the manifold. For example, the housing 102 may carry one or more radial seals 148. In the example shown, two radial seals 148 are disposed at an exterior of the first housing 140 and spaced along the longitudinal axis so that the seals 148 are disposed at opposite sides of the outlet ports 122. In other implementations, the fasteners 146 and/or the seals 148 may be carried by the second housing 142.

In certain implementations, the poppet 104 is disposed partially in the regulating region 110 and partially in the outlet region 108. In certain implementations, the poppet 104 includes a disc portion 130 disposed in the regulating region 110 and a stem portion 132 that extends into the outlet region 108. In certain examples, the first biasing member 124 presses against the disc portion 130 of the poppet 104. In certain examples, the biasing member 124 is disposed presses the disc portion 130 in a common direction with fluid passing through the passage 116 from the inlet region 106 to the outlet region 108. In certain examples, the first housing 140 defines a recessed floor on which the first biasing member 124 seats with the disc portion 130 of the poppet 104 mounted over the first biasing member 124.

In certain implementations, the seal 118 is carried by the stem portion 132. In certain examples, the seal 118 is carried at an axial end of the stem portion 132. In certain implementations, an internal seal 112 seals between the stem portion 132 and the first housing 140 to seal off the outlet region 108 from the regulating region 110 except for the passage 136. In certain implementations, the stem portion 132 defines the passage 136 that extends between the outlet region 108 and the regulating region 110. In certain examples, the passage 136 has a radial segment 136a and an axial segment 136b. In an example, the radial segment 136a aligns with the outlet ports 122 when the poppet 104 is disposed in the closed position. In certain examples, the axial segment 136b widens out as the axial segment 136b extends towards the regulating region 110.

In certain implementations, the poppet 104 seals to the housing 102 at seal 134 to sub-divide the regulating region 110 into a first sub-region 125 and a second sub-region 127. For example, the disc portion 130 of the poppet 104 may carry a radial seal 134 (e.g., an o-ring) that slides against the housing 102 (e.g., to the second housing 142) as the poppet 104 moves open and closed. In certain examples, the first biasing member 124 is disposed in the first sub-region 125 and the second biasing member 126 is disposed in the second sub-region 127. The passage 136 leads to the second sub-region 127. A vent 150 leads out from the first sub-region 125 to an exterior of the housing 102. In certain examples, the vent 150 enables any fluid leaking from the second sub-region 127 to the first sub-region 125 to leave the pressure regulator 100 to inhibit any buildup of pressure within the first sub-region 125. In certain examples, the vent 150 ensures that the fluid pressure contained in the first sub-region 125 is equivalent to the ambient pressure. Accordingly, the fluid pressure in the second sub-region 127 required for the poppet 104 to move to the closed position remains constant with respect to the ambient pressure.

In certain implementations, the stop 128 seals to the housing 102 at seal 138 to further section out a third sub-region 129. One axial end of the stop 128 at least partially bounds the second sub-region 127 and the opposite axial end of the stop 128 at least partially bounds the third sub-region 129. Moving the stop 128 axially within the regulating region 110 changes the size of the second and third sub-regions 127, 129. Reducing the size of the second sub-region 127 compresses or further compresses the second biasing member 126. Accordingly, less fluid pressure needs to build up within the second sub-region 127 of the regulating region 110 to counteract the biasing force of the first biasing member 124 and thereby move the poppet 104 to the closed position. In certain examples, a vent 152 leads out from the third sub-region 129 to an exterior of the housing 102.

In some examples, the first passage 116 is defined by the first housing 140. In other examples, the first passage 116 is defined by an insert arrangement 145 disposed within a cavity defined in the first housing 140. The insert arrangement 145 is sealed to an interior of the first housing 140 at a seal 114 (e.g., an axial seal, a radial seal, etc.). In certain examples, the insert arrangement 145 is formed of multiple pieces that can be assembled within the cavity of the first housing 140.

## Claims

1. A pressure regulator (100) comprising:
a housing (102) defining an inlet region (106), an outlet region (108), and a regulating region (110), the inlet and outlet regions (106, 108) being separated by a first passage (116), the inlet region (106) being configured to receive inlet pressure along a first direction;
a poppet (104) disposed within the housing (102), the poppet (104) extending along a length between first and second ends, the first end being disposed at the outlet region (108) and the second end being disposed at the regulating region (110), the poppet (104) being movable relative to the housing (102) between open and closed positions, the poppet (104) sealing closed the first passage (116) when the poppet (104) is disposed in the closed position and the poppet (104) opening the first passage (116) when the poppet (104) is moved towards the open position, the poppet (104) defining a second passage (136) fluidly connecting the outlet region (108) and the regulating region (110);
**characterized in that**
the poppet (104) includes a stem (132) extending outwardly from a disc (130); and
the pressure regulator (100) further comprises:
a first biasing member (124) biasing the poppet (104) along the first direction towards the open position;
a stop (128) disposed at the regulating region (110), wherein the stop (128) is selectively positionable within the regulating region (110); and
a second biasing member (126) disposed between the stop (128) and the poppet (104), the second biasing member (126) applying less force than the first biasing member (124), and wherein the first and the second biasing member (124, 126) are disposed against opposite sides of the disc (130).

2. The pressure regulator (100) of claim 1, wherein the poppet (104) carries a seal (118) that presses against a valve seat surrounding the first passage (116) when the poppet (104) is disposed in the closed position, and wherein the seal (118) is spaced from the valve seat when the poppet (104) is disposed in the open position.

3. The pressure regulator (100) of claim 1, further comprising an adjustment interface arrangement (160) configured to selectively position the stop (128) within the regulating region (110).

4. The pressure regulator (100) of claim 3, wherein the adjustment interface arrangement (160) is twistable to select the position of the stop (128).

5. The pressure regulator (100) of any of claims 1-4, wherein the inlet region (106), the outlet region (108), and the regulating region (110) are aligned along a longitudinal axis (A) of the housing (102), and wherein the poppet (104) moves relative to the housing (102) along the longitudinal axis (A).

6. The pressure regulator (100) of any of claims 1-5, wherein the housing (102) defines an outlet port (122) at the outlet region (108), the outlet port (122) facing in a different direction from an inlet port (120) at the inlet region (106).

7. The pressure regulator (100) of claim 1, wherein the poppet (104) separates at least a portion of the regulating region (110) into first and second regions (125, 127), the poppet (104) carrying a radial seal (134) that seals the second region (127) from the first region (125), the first biasing member (124) being disposed in the first region (125), and the second biasing member (126) being disposed in the second region (127); and wherein a first vent (150) is fluidly connecting the first region (125) to ambient.

8. The pressure regulator (100) of claim 1, wherein the regulating region (110) also has a third region (129), wherein the stop (128) has a second radial seal (138) that separates the third region (129) from the second region (127); and wherein a second vent (152) is fluidly connecting the third region (129) to ambient.

9. A method of operating a pressure regulator (100) comprising:
adjusting a preload force against a poppet (104), the poppet (104) biased by a first biasing member (124) on a first side and second biasing member (126) on a second opposite side of the poppet (104); wherein adjusting the preload force includes changing the position of a stop (128) and changing a biasing force of the second biasing member (126), the first biasing member (124) being stronger than a second biasing member (126) abutting against a second opposite side of the poppet (104);
directing fluid through an inlet (120) of the pressure regulator (100) along a first direction;
directing the fluid through a passage (118) to an outlet region (108) of the pressure regulator (100);
directing a first portion of the fluid within the outlet region (108) out of the pressure regulator (100) through an outlet (122);
directing a second portion of the fluid within the outlet region (108) through a poppet (104) to the regulating region (110);
applying a closing force to the poppet (104) using the second portion of the fluid, the closing force being applied in a second direction that is opposite the first direction.

10. The method of claim 9, further comprising applying a biasing force to the poppet (104) along the first direction; and applying a pre-load force to the poppet (104) along the second direction.

11. The method of claim 10, further comprising adjusting the pre-load force applied to the poppet (104).

12. The method of claim 11, wherein adjusting the pre-load force includes rotating an adjuster (160) from an exterior of the pressure regulator (100).

## Patentansprüche

1. Druckregler (100), umfassend:
ein Gehäuse (102), das einen Einlassbereich (106), einen Auslassbereich (108) und einen Regelbereich (110) definiert, wobei der Einlass- und der Auslassbereich (106, 108) durch eine erste Passage (116) voneinander getrennt sind, wobei der Einlassbereich (106) so konfiguriert ist, dass er Einlassdruck entlang einer ersten Richtung aufnimmt;
einen im Gehäuse (102) angeordneten Ventilkörper (104), wobei sich der Ventilkörper (104) über eine Länge zwischen einem ersten und einem zweiten Ende erstreckt, wobei das erste Ende am Auslassbereich (108) und das zweite Ende am Regelbereich (110) angeordnet ist, wobei der Ventilkörper (104) relativ zum Gehäuse (102) zwischen einer offenen und einer geschlossenen Position bewegbar ist, wobei der Ventilkörper (104) die erste Passage (116) abdichtend verschließt, wenn sich der Ventilkörper (104) in der geschlossenen Position befindet, und der Ventilkörper (104) die erste Passage (116) öffnet, wenn der Ventilkörper (104) in Richtung der offenen Position bewegt wird, wobei der Ventilkörper (104) eine zweite Passage (136) definiert, die den Auslassbereich (108) und den Regelbereich (110) fluidisch verbindet;
**dadurch gekennzeichnet, dass**
der Ventilkörper (104) einen Schaft (132) einschließt, der sich von einer Scheibe (130) nach außen erstreckt; und
der Druckregler (100) ferner Folgendes umfasst:
ein erstes Vorspannelement (124), das den Ventilkörper (104) entlang der ersten Richtung in Richtung der offenen Position vorspannt;
einen Anschlag (128), der im Regelbereich (110) angeordnet ist, wobei der Anschlag (128) selektiv innerhalb des Regelbereichs (110) positionierbar ist; sowie
ein zweites Vorspannelement (126), das zwischen dem Anschlag (128) und dem Ventilkörper (104) angeordnet ist, wobei das zweite Vorspannelement (126) eine Kraft anwendet, die unterhalb der Kraft des ersten Vorspannelements (124) liegt, und wobei das erste und das zweite Vorspannelement (124, 126) an gegenüberliegenden Seiten der Scheibe (130) angeordnet sind.

2. Druckregler (100) nach Anspruch 1, wobei der Ventilkörper (104) eine Dichtung (118) trägt, die gegen einen die erste Passage (116) umgebenden Ventilsitz drückt, wenn sich der Ventilkörper (104) in der geschlossenen Position befindet, und wobei die Dichtung (118) vom Ventilsitz beabstandet ist, wenn sich der Ventilkörper (104) in der offenen Position befindet.

3. Druckregler (100) nach Anspruch 1, ferner umfassend eine Einstellschnittstellenanordnung (160) umfasst, die so konfiguriert ist, dass sie den Anschlag (128) selektiv innerhalb des Regelbereichs (110) positioniert.

4. Druckregler (100) nach Anspruch 3, wobei die Einstellschnittstellenanordnung (160) verdrehbar ist, um die Position des Anschlags (128) auszuwählen.

5. Druckregler (100) nach einem der Ansprüche 1 - 4, wobei der Einlassbereich (106), der Auslassbereich (108) und der Regelbereich (110) entlang einer Längsachse (A) des Gehäuses (102) ausgerichtet sind und wobei sich der Ventilkörper (104) relativ zum Gehäuse (102) entlang der Längsachse (A) bewegt.

6. Druckregler (100) nach einem der Ansprüche 1 - 5, wobei das Gehäuse (102) am Auslassbereich (108) eine Auslassöffnung (122) definiert, wobei die Auslassöffnung (122) in eine andere Richtung weist als eine Einlassöffnung (120) am Einlassbereich (106).

7. Druckregler (100) nach Anspruch 1, wobei der Ventilkörper (104) zumindest einen Abschnitt des Regelbereichs (110) in einen ersten und einen zweiten Bereich (125, 127) trennt, wobei der Ventilkörper (104) eine Radialdichtung (134) trägt, die den zweiten Bereich (127) gegenüber dem ersten Bereich (125) abdichtet, wobei das erste Vorspannelement (124) im ersten Bereich (125) angeordnet ist und das zweite Vorspannelement (126) im zweiten Bereich (127) angeordnet ist; und wobei eine erste Entlüftung (150) den ersten Bereich (125) fluidisch mit der Umgebung verbindet.

8. Druckregler (100) nach Anspruch 1, wobei der Regelbereich (110) zudem einen dritten Bereich (129) aufweist, wobei der Anschlag (128) eine zweite Radialdichtung (138) aufweist, die den dritten Bereich (129) vom zweiten Bereich (127) trennt; und wobei eine zweite Entlüftung (152) den dritten Bereich (129) fluidisch mit der Umgebung verbindet.

9. Verfahren zum Betreiben eines Druckreglers (100), umfassend:
Anpassen einer Vorlastkraft gegen einen Ventilkörper (104), wobei der Ventilkörper (104) durch ein erstes Vorspannelement (124) auf einer ersten Seite und ein zweites Vorspannelement (126) auf einer zweiten, gegenüberliegenden Seite des Ventilkörpers (104) vorgespannt wird; wobei das Anpassen der Vorspannkraft die Veränderung der Position eines Anschlags (128) und die Veränderung einer Vorspannkraft des zweiten Vorspannelements (126) einschließt, wobei das erste Vorspannelement (124) stärker ist als das zweite Vorspannelement (126), das an einer zweiten, gegenüberliegenden Seite des Ventilkörpers (104) anliegt;
Leiten von Fluid durch einen Einlass (120) des Druckreglers (100) entlang einer ersten Richtung;
Leiten des Fluids durch eine Passage (118) zu einem Auslassbereich (108) des Druckreglers (100);
Leiten eines ersten Abschnitts des Fluids innerhalb des Auslassbereichs (108) aus dem Druckregler (100) durch einen Auslass (122) heraus;
Leiten eines zweiten Abschnitts des Fluids innerhalb des Auslassbereichs (108) durch einen Ventilkörper (104) in den Regelbereich (110);
Anwenden einer Schließkraft auf den Ventilkörper (104) unter Verwendung des zweiten Abschnitts des Fluids, wobei die Schließkraft in einer zweiten Richtung angewendet wird, die der ersten Richtung entgegengesetzt ist.

10. Verfahren nach Anspruch 9, ferner umfassend Anwenden einer Vorspannkraft auf den Ventilkörper (104) entlang der ersten Richtung; und Anwenden einer Vorlastkraft auf den Ventilkörper (104) entlang der zweiten Richtung.

11. Verfahren nach Anspruch 10, ferner umfassend Anpassen der auf den Ventilkörper (104) angewendeten Vorlastkraft.

12. Verfahren nach Anspruch 11, wobei das Anpassen der Vorlastkraft die Drehung eines Einstellers (160) von der Außenseite des Druckreglers (100) einschließt.

## Revendications

1. Régulateur de pression (100) comprenant :
un boîtier (102) définissant une région d'entrée (106), une région de sortie (108) et une région de régulation (110), les régions d'entrée et de sortie (106, 108) étant séparées par un premier passage (116), la région d'entrée (106) étant conçue pour recevoir la pression d'entrée dans une première direction ;
un clapet (104) disposé au sein du boîtier (102), le clapet (104) s'étendant le long d'une longueur entre des première et seconde extrémités, la première extrémité étant disposée au niveau de la région de sortie (108) et la seconde extrémité étant disposée au niveau de la région de régulation (110), le clapet (104) étant mobile par rapport au boîtier (102) entre des positions ouverte et fermée, le clapet (104) scellant le premier passage (116) pour le fermer lorsque le clapet (104) est disposé dans la position fermée et le clapet (104) ouvrant le premier passage (116) lorsque le clapet (104) est entraîné en mouvement vers la position ouverte, le clapet (104) définissant un second passage (136) reliant de manière fluidique la région de sortie (108) et la région de régulation (110) ;
**caractérisé en ce que**
le clapet (104) comporte une tige (132) s'étendant vers l'extérieur à partir d'un disque (130) ; et
le régulateur de pression (100) comprend en outre :
un premier élément de sollicitation (124) sollicitant le clapet (104) le long de la première direction vers la position ouverte ;
une butée (128) disposée au niveau de la région de régulation (110), dans lequel la butée (128) peut être positionnée de manière sélective au sein de la région de régulation (110) ; et
un second élément de sollicitation (126) disposé entre la butée (128) et le clapet (104), le second élément de sollicitation (126) appliquant une force inférieure à celle du premier élément de sollicitation (124), et dans lequel le premier et le second élément de sollicitation (124, 126) sont disposés contre des côtés opposés du disque (130).

2. Régulateur de pression (100) selon la revendication 1, dans lequel le clapet (104) porte un joint (118) qui appuie contre un siège de soupape entourant le premier passage (116) lorsque le clapet (104) est disposé dans la position fermée, et dans lequel le joint (118) est espacé du siège de soupape lorsque le clapet (104) est disposé dans la position ouverte.

3. Régulateur de pression (100) selon la revendication 1, comprenant en outre un agencement d'interface de réglage (160) conçu pour positionner sélectivement la butée (128) au sein de la région de régulation (110).

4. Régulateur de pression (100) selon la revendication 3, dans lequel l'agencement d'interface de réglage (160) peut être torsadé pour sélectionner la position de la butée (128).

5. Régulateur de pression (100) selon l'une quelconque des revendications 1 à 4, dans lequel la région d'entrée (106), la région de sortie (108) et la région de régulation (110) sont alignées le long d'un axe longitudinal (A) du boîtier (102), et dans lequel le clapet (104) entre en mouvement par rapport au boîtier (102) le long de l'axe longitudinal (A).

6. Régulateur de pression (100) selon l'une quelconque des revendications 1 à 5, dans lequel le boîtier (102) définit un orifice de sortie (122) au niveau de la région de sortie (108), l'orifice de sortie (122) étant orienté dans une direction différente de celle d'un orifice d'entrée (120) au niveau de la région d'entrée (106).

7. Régulateur de pression (100) selon la revendication 1, dans lequel le clapet (104) sépare au moins une partie de la région de régulation (110) en première et deuxième régions (125, 127), le clapet (104) portant un joint radial (134) qui scelle la deuxième région (127) par rapport à la première région (125), le premier élément de sollicitation (124) étant disposé dans la première région (125) et le second élément de sollicitation (126) étant disposé dans la deuxième région (127) ; et dans lequel un premier évent (150) relie la première région (125) à l'environnement de manière fluidique.

8. Régulateur de pression (100) selon la revendication 1, dans lequel la région de régulation (110) a également une troisième région (129), dans lequel la butée (128) a un second joint radial (138) qui sépare la troisième région (129) de la deuxième région (127) ; et dans lequel un second évent (152) relie la troisième région (129) à l'environnement de manière fluidique.

9. Procédé de fonctionnement d'un régulateur de pression (100) comprenant :
le réglage d'une force de précharge contre un clapet (104), le clapet (104) étant sollicité par un premier élément de sollicitation (124) d'un premier côté et par un second élément de sollicitation (126) d'un second côté opposé du clapet (104) ;
dans lequel le réglage de la force de précharge comporte la modification de la position d'une butée (128) et la modification d'une force de sollicitation du second élément de sollicitation (126), le premier élément de sollicitation (124) étant plus résistant qu'un second élément de sollicitation (126) venant buter contre un second côté opposé du clapet (104) ;
le fait de diriger le fluide à travers une entrée (120) du régulateur de pression (100) le long d'une première direction ;
le fait de diriger le fluide à travers un passage (118) vers une région de sortie (108) du régulateur de pression (100) ;
le fait de diriger une première partie du fluide au sein de la région de sortie (108) hors du régulateur de pression (100) à travers une sortie (122) ;
le fait de diriger une seconde partie du fluide au sein de la région de sortie (108) à travers un clapet (104) vers la région de régulation (110) ;
l'application d'une force de fermeture au clapet (104) en utilisant la seconde partie du fluide, la force de fermeture étant appliquée dans une seconde direction qui est opposée à la première direction.

10. Procédé selon la revendication 9, comprenant en outre l'application d'une force de sollicitation au clapet (104) le long de la première direction ; et l'application d'une force de précharge au clapet (104) le long de la seconde direction.

11. Procédé selon la revendication 10, comprenant en outre le réglage de la force de précharge appliquée au clapet (104).

12. Procédé selon la revendication 11, dans lequel le réglage de la force de précharge comporte la rotation d'un dispositif de réglage (160) depuis un extérieur du régulateur de pression (100).
